# EUROPÄISCHE PATENTSCHRIFT

(11) **EP 2 341 027 B1**
(45) Veröffentlichungstag und Bekanntmachung des Hinweises auf die Patenterteilung: **26.12.2012**
(21) Anmeldenummer: 10150145.0
(22) Anmeldetag: 05.01.2010
(51) Int. Cl.: B66B 1/24, B66B 1/20

(54) **Verfahren zur Steuerung einer Aufzuganlage und Aufzuganlage zur Durchführung des Verfahrens**
Method for control of a lift assembly and lift assembly for executing the method
Procédé de commande d'une installation d'ascenseur et installation d'ascenseur destinée à l'exécution du procédé

(43) Veröffentlichungstag der Anmeldung: 06.07.2011
(73) Patentinhaber: ThyssenKrupp Aufzugswerke GmbH, 73765 Neuhausen (DE)
(72) Erfinder: Thumm, Gerhard, 70794 Filderstadt (DE); Dolde, Walter, 70794 Filderstadt (DE); Meyle, Peter, 72124 Pliezhausen (DE); Gerstenmeyer, Stefan, 70794 Filderstadt (DE)
(74) Vertreter: Boehme, Ulrich

(56) Entgegenhaltungen:
- GB-A- 2 129 971
- GB-A- 2 387 450
- US-A- 5 298 695
- US-A1- 2007 131 486

## Beschreibung

Die Erfindung betrifft ein Verfahren zur Steuerung einer Aufzuganlage mit mindestens einem Schacht, in dem zumindest ein Fahrkorb zum Transport von Personen und/oder Lasten mittels einer Antriebseinrichtung verfahrbar ist, und mit einer Aufzugsteuervorrichtung, die den Betrieb der Aufzuganlage steuert. Außerdem betrifft die Erfindung eine Aufzuganlage zur Durchführung des Verfahrens.

Mittels derartiger Aufzuganlagen kann in einem Schacht mindestens ein Fahrkorb nach oben und nach unten verfahren werden. Innerhalb des Fahrkorbs oder auch an Haltestellen auf den einzelnen Stockwerken, die vom Fahrkorb bedient werden, kann der Benutzer einen Zielruf eingeben. Ein entsprechendes Steuersignal wird an die Aufzugsteuervorrichtung übertragen, die dann die Antriebseinrichtung zur gewünschten Fahrt des Fahrkorbes steuert. Üblicherweise können die Position, die Geschwindigkeit sowie die Fahrtrichtung des Fahrkorbes erfasst werden und entsprechende Positions-, Geschwindigkeits-und Fahrtrichtungssignale können an die Aufzugsteuervorrichtung übertragen werden.

Es sind Aufzuganlagen bekannt, bei denen zur Energieeinsparung einzelne Energieverbraucher nach einiger Zeit abgeschaltet werden, sofern kein Benutzer einen Zielruf eingibt. So sind zum Beispiel Anlagen bekannt, bei denen das Fahrkorblicht oder Teile der Aufzugsteuervorrichtung abgeschaltet werden, sofern seit mehr als fünf Minuten kein Zielruf eingegeben wurde. Die Bestimmung der für eine gewünschte Energieeinsparung optimalen Abschaltzeit ist allerdings sehr schwierig. Wird die Abschaltzeit zu kurz gewählt, so führt dies zu einem nicht unerheblichen Verschleiß der Energieverbraucher, da sie häufig bereits kurz nach Ablauf der Abschaltzeit wieder eingeschaltet werden müssen, weil ein neuer Zielruf eingeht. Eine hohe Schalthäufigkeit der Energieverbraucher begrenzt deren Lebensdauer und führt damit indirekt zu einem erhöhten Energieverbrauch, da sie durch neue Geräte ersetzt werden müssen. Wird die Abschaltzeit zu lang gewählt, so werden zwar unnötige Ein- und Ausschaltvorgänge der Energieverbraucher vermieden, allerdings verbleibt dann die Aufzuganlage auch unnötig lange in einem Betriebszustand mit höherem Energieverbrauch.

In Ergänzung zum Energieverbrauch ist selbstverständlich auch die Förderleistung einer Aufzuganlage von großer Bedeutung. Vor allem in Zeiten eines hohen Verkehrsaufkommens sollen möglichst viele Benutzer innerhalb möglichst kurzer Zeit von ihrer Starthaltestelle zu ihrer Zielhaltestelle befördert werden.

Aus der Veröffentlichung US 5,298,695 A ist ein Verfahren zur Steuerung einer Aufzuganlage bekannt, bei dem man Benutzungsdaten der Aufzuganlage speichert und mit den gespeicherten Benutzungsdaten eine Vorhersage macht über das zukünftige Verkehrsaufkommen der Aufzuganlage. Zusätzlich zu den aktuellen Benutzungsdaten können historische Benutzungsdaten für die Vorhersage herangezogen werden, wobei geprüft werden kann, ob und gegebenenfalls in welchem Umfange die aktuellen Benutzungsdaten von den historischen Benutzungsdaten abweichen. Aufgrund des vorhergesagten Verkehrsaufkommens wird dann die zu erwartende Fahrgastansammlung bestimmt. In Abhängigkeit von der zu erwartenden Fahrgastansammlung wird für die Bewegung der Fahrkörbe ein bestimmtes Fahrprofil ausgewählt. Ist eine große Fahrgastansammlung zu erwarten, so wird ein sehr effizientes Fahrprofil mit großen Fahrkorbgeschwindigkeiten und großen Fahrkorbbeschleunigungen ausgewählt. Ist keine große Fahrgastansammlung zu erwarten, so wird ein komfortableres Fahrprofil mit geringeren Fahrkorbgeschwindigkeiten und geringeren Fahrkorbbeschleunigungen ausgewählt.

Aufgabe der vorliegenden Erfindung ist es, ein Verfahren zur Steuerung einer Aufzuganlage der eingangs genannten Art sowie eine Aufzuganlage zur Durchführung des Verfahrens bereitzustellen, wobei der Energieverbrauch und der Verschleiß der Aufzuganlage reduziert werden können und die Förderleistung gesteigert werden kann.

Diese Aufgabe wird bei einem Verfahren der gattungsgemäßen Art erfindungsgemäß dadurch gelöst, dass man Benutzungsdaten der Aufzuganlage erfasst und in mindestens einer Datenbank der Aufzugsteuervorrichtung speichert, innerhalb eines vorgegebenen oder vorgebbaren Erfassungszeitraums erfasste Benutzungsdaten mittels mindestens einer ein Betriebssystem aufweisenden Signalverarbeitungseinrichtung der Aufzugsteuervorrichtung auf das Vorliegen von Benutzungsmustern auswertet und den Betrieb der Aufzuganlage in Abhängigkeit der Benutzungsmuster vorausschauend energie- und/oder förderleistungsoptimiert steuert.

Beim erfindungsgemäßen Verfahren werden Benutzungsdaten, insbesondere Zustände, Fahrprofile und/oder Benutzungshäufigkeiten der Aufzuganlage von der Aufzugsteuervorrichtung erfasst und in mindestens einer Datenbank gespeichert. Beispielsweise können die Beladungszustände des mindestens einen Fahrkorbs gespeichert werden und auch das Fahrprofil des mindestens einen Fahrkorbs, also der Verlauf der Fahrkorbgeschwindigkeit in Abhängigkeit vom zurückgelegten Weg, wobei auch der Start und das Ziel der Fahrt des Fahrkorbs gespeichert werden können. Ergänzend oder alternativ kann die Häufigkeit der Benutzung des Fahrkorbs gespeichert werden. Sämtliche Benutzungsdaten werden in einer oder mehreren Datenbanken der Aufzugsteuervorrichtung hinterlegt. Die innerhalb eines vorgegebenen oder vorgebbaren Erfassungszeitraums erfassten Daten werden von mindestens einer Signalverarbeitungseinrichtung der Aufzugsteuervorrichtung ausgewertet, indem Gemeinsamkeiten, Regelmäßigkeiten, Wiederholungen, Ähnlichkeiten oder Gesetzmäßigkeiten in Form von Benutzungsmustern erkannt oder extrahiert werden. Die mindestens eine Signalverarbeitungseinrichtung hat ein Betriebssystem. Dies erlaubt den Einsatz einer an sich bekannten Auswertungssoftware und auch den Einsatz von mindestens einer umfassenden Datenbank, in der die Benutzungsdaten gespeichert werden. Anhand der Benutzungsmuster wird dann der Betrieb der Aufzuganlage vorausschauend gesteuert. Die erfassten Benutzungsmuster können zur Optimierung des Energieverbrauchs herangezogen werden. Auf Grundlage der erkannten Benutzungsmuster kann die Aufzuganlage derart gesteuert werden, dass sie möglichst wenig Energie benötigt. So kann anhand der Benutzungsmuster von der Aufzugsteuervorrichtung beim Betrieb der Aufzuganlage und insbesondere bei der Steuerung des mindestens einen Fahrkorbs berücksichtigt werden, dass die Aufzuganlage zu bestimmten Zeiten von sehr vielen Personen benutzt wird, so dass sich zu diesen Zeiten das Abschalten einzelner Energieverbraucher oder von Teilen der Aufzugsteuervorrichtung nicht lohnt, wohingegen zu anderen Zeiten die Aufzuganlage nur sehr wenig benutzt wird, so dass es Sinn macht, bereits nach kurzen Zeiten der Nichtbenutzung in den Stand-by-Betrieb überzugehen, denn es ist dann unwahrscheinlich, dass bereits nach kurzer Zeit wieder ein Zielruf eingegeben wird.

Die Auswertung der Benutzungsdaten zur Bestimmung von Benutzungsmustern ist aber nicht nur von Vorteil, um den Energieverbrauch gering zu halten. Die Förderleistung der Aufzuganlage kann anhand der Benutzungsmuster optimiert werden. Anhand der erfassten Benutzungsmuster kann der Betrieb der Aufzuganlage in Zeiten eines zu erwartenden hohen Verkehrsaufkommens vorausschauend derart gesteuert werden, dass möglichst viele Personen innerhalb kurzer Zeit zu ihrem Fahrtziel gelangen. Die Steuerung der Aufzuganlage in Abhängigkeit von den erfassten Benutzungsmustern gibt die Möglichkeit, einerseits eine sehr hohe Förderleistung zu erzielen, und andererseits kann der Energieverbrauch der Aufzuganlage möglichst gering gehalten werden.

Die Auswertung der in der mindestens einen Datenbank hinterlegten Benutzungsdaten, die beispielsweise den Zustand, Fahrprofile und/oder Benutzungshäufigkeiten der Aufzuganlage wiedergeben, kann beispielsweise numerisch erfolgen oder mittels eines neuronalen Netzwerks oder durch die Methode der fuzzy logic. Derartige Auswertemethoden sind dem Fachmann an sich bekannt und bedürfen daher vorliegend keiner näheren Erläuterung.

Die Benutzungsdaten werden erfindungsgemäß über einen vorgegebenen oder auch einen vom Betreiber der Aufzuganlage vorgebbaren Erfassungszeitraum erfasst und in der Datenbank gespeichert. Der Erfassungszeitraum beträgt bevorzugt mindestens einen Monat, denn dies ermöglicht es, täglich, wöchentlich und auch monatlich wiederkehrende Ereignisse zu erkennen. Insbesondere kann bei einem Erfassungszeitraum von mindestens einem Monat das unterschiedliche Benutzerverhalten an Sonn- und Feiertagen erkannt werden, so dass die Steuerung der Aufzuganlage vorausschauend im Hinblick auf das zu erwartende Benutzerverhalten am aktuellen Wochentag ausgerichtet werden kann. Beispielsweise ist bei Bürogebäuden, die über eine Kantine oder Cafeteria verfügen, welche zur Mittagszeit von vielen Benutzern frequentiert wird, zu erwarten, dass zur Mittagszeit von sehr vielen Benutzern das die Kantine bzw. Cafeteria aufweisende Stockwerk als Starthaltestelle gewählt wird, wohingegen ein derartiges Benutzerverhalten an Wochenenden und insbesondere an Sonn- und Feiertagen nicht zu erwarten ist.

Von besonderem Vorteil ist es, wenn der Erfassungszeitraum mindestens ein Jahr beträgt, denn dadurch können auch Änderungen des Benutzerverhaltens, die sich über Monate erstrecken, zuverlässig erkannt werden. Dies gilt beispielsweise für vorwiegend im Sommer gelegene Urlaubszeiten, die von der Aufzuganlage eines Bürokomplexes bei der Steuerung berücksichtigt werden können, um den Energieverbrauch und/oder die Förderkapazität zu optimieren.

Es kann vorgesehen sein, dass man die Benutzerdaten fortlaufend erfasst, das heißt, dass man bei jeder Fahrt des mindestens einen Fahrkorbs entsprechende Benutzerdaten sammelt und speichert.

Alternativ kann vorgesehen sein, dass man die Benutzerdaten zu bestimmten Tages- oder Wochenzeiten erfasst oder beispielsweise auch jeweils die Daten, die bei jeder zweiten oder dritten Fahrt des mindestens einen Fahrkorbs auftreten.

Bei einer vorteilhaften Ausführungsform des erfindungsgemäßen Verfahrens erfasst man bei einer Fahrt des mindestens einen Fahrkorbs als Benutzungsdaten zumindest den Startzeitpunkt der Fahrt, die Start- und die Zielhaltestelle sowie die Beladung des Fahrkorbs. Die Auswertung dieser Daten ermöglicht es festzustellen, zu welchen Tageszeiten welche Start- und welche Zielhaltestellen besonders häufig von einer Vielzahl von Benutzern gewählt werden. Diese Daten können wiederum zur energieoptimierten und/oder förderleistungsoptimierten Steuerung der Aufzuganlage herangezogen werden. Die Beladung des mindestens einen Fahrkorbs gibt hierbei einen Hinweis auf die Anzahl der Benutzer, die den Fahrkorb für eine bestimmte Fahrtstrecke, das heißt für den Weg von einer bestimmten Start- zu einer bestimmten Zielhaltestelle, gewählt haben.

Günstig ist es, wenn man bei jeder Fahrt des mindestens einen Fahrkorbs den Startzeitpunkt der Fahrt, die Start- und die Zielhaltestelle sowie die Beladung des Fahrkorbes erfasst und in der Datenbank speichert.

Zur Erzielung einer möglichst hohen Förderleistung kann beispielsweise vorgesehen sein, dass man den mindestens einen Fahrkorb bei Nichtgebrauch in Abhängigkeit von der Tageszeit und möglichst auch in Abhängigkeit vom Wochentag in der jeweils am häufigsten gewählten Starthaltestelle bereitstellt. Die Starthaltestelle kann beispielsweise frühmorgens das Erdgeschoss eines Bürokomplexes sein oder das Geschoss, in dem sich eine Tiefgarage befindet, und zur Mittageszeit kann als Starthaltestelle, in der der mindestens eine Fahrkorb bereitgestellt wird, das die Cafeteria oder die Kantine aufweisende Stockwerk gewählt werden.

Zur Optimierung der Förderleistung ist bei einer besonders vorteilhaften Ausführungsform der Erfindung vorgesehen, dass man die Beschleunigung und/oder die Geschwindigkeit des mindestens einen Fahrkorbs in Abhängigkeit von den Benutzungsmustern steuert. Wird durch Auswertung der Benutzungsdaten festgestellt, dass zu bestimmen Zeiten üblicherweise ein hohes Verkehrsaufkommen vorliegt, so kann zu diesen Zeiten die Beschleunigung oder auch die Geschwindigkeit des mindestens einen Fahrkorbs erhöht werden, um innerhalb möglichst kurzer Zeit viele Personen befördern zu können. In Zeiten eines geringeren Verkehrsaufkommens kann dagegen die Beschleunigung und/oder die Geschwindigkeit des mindestens einen Fahrkorbs verhältnismäßig gering gewählt werden, so dass in diesen Zeiten der Energieverbrauch der Aufzuganlage verringert werden kann. Die Beschleunigung und/oder die Geschwindigkeit des mindestens einen Fahrkorbs kann somit vorausschauend an die aufgrund des erfassten Benutzungsmusters zu erwartende Verkehrssituation angepasst werden.

Es kann alternativ oder ergänzend vorgesehen sein, dass man Leuchtelemente von mindestens einem Fahrkorb der Aufzuganlage in Abhängigkeit von den Benutzungsmustern steuert. Der Betrieb der Leuchtelemente erfolgt somit vorausschauend anhand der erfassten Benutzungsmuster. Ist anhand der Benutzungsmuster damit zu rechnen, dass bereits nach kurzer Wartezeit wieder Personen zu befördern sind, so können die Leuchtelemente erst nach längerer Wartezeit abgeschaltet werden, so dass unnötige Ein- und Ausschaltvorgänge vermieden werden. Dies erhöht die Lebensdauer der Leuchtelemente. Ist andererseits damit zu rechnen, dass erst nach längerer Wartezeit wieder Personen einen Zielruf eingeben, so können die Leuchtelemente bereits nach sehr kurzer Zeit abgeschaltet werden, um dadurch den Energieverbrauch der Aufzuganlage zu vermindern. Es kann somit durch die Steuerung der Leuchtelemente in Abhängigkeit von den Benutzungsmustern ein optimaler Kompromiss erzielt werden zwischen der möglichst gering zu haltenden Schalthäufigkeit der Leuchtelemente und der möglichst groß zu wählenden Energieeinsparung.

Bei einer vorteilhaften Ausgestaltung des erfindungsgemäßen Verfahrens ist vorgesehen, dass man die Beschleunigung und/oder die Geschwindigkeit der Öffnungs- und Schließbewegungen von mindestens einer Fahrkorbtür in Abhängigkeit von den Benutzungsmustern steuert. Die Öffnungs- und Schließbewegungen der Fahrkorbtür können somit vorausschauend an die aufgrund der Benutzungsmuster zu erwartende Verkehrssituation angepasst werden. In Zeiten eines geringeren Verkehrsaufkommens kann die Beschleunigung und/oder die Geschwindigkeit der mindestens einen Fahrkorbtür geringer gewählt werden als in Zeiten eines sehr hohen Verkehrsaufkommens. Dadurch kann der Verschleiß der Lagerelemente der Fahrkorbtür vermindert werden und es kann eine Energieeinsparung erzielt werden.

Auch andere Energieverbraucher, die mit mindestens einem Fahrkorb gekoppelt sind, können anhand der Benutzungsmuster vorausschauend an die zu erwartende Verkehrssituation angepasst werden.

Es kann beispielsweise vorgesehen sein, dass man Lüftungsaggregate von mindestens einem Fahrkorb in Abhängigkeit von den Benutzungsmustern steuert. Ist anhand der Benutzungsmuster zu erwarten, dass sich zu bestimmten Zeiten mehrere Personen gleichzeitig in einem Fahrkorb befinden, so kann zur verstärkten Belüftung des Fahrkorbs die Leistung eines Lüftungsaggregats erhöht werden. Ist andererseits damit zu rechnen, dass sich in absehbarer Zeit allenfalls eine einzelne Person im Fahrkorb befinden wird, so kann die Leistung des Lüftungsaggregates abgesenkt oder das Lüftungsaggregat ganz abgeschaltet werden.

Die vorausschauende Steuerung der Aufzuganlage in Abhängigkeit von den Benutzungsmustern ist nicht nur zur Reduzierung des Energieverbrauchs und zur Steigerung der Förderleistung von Vorteil, sondern es kann darüber hinaus auch die Steuerung von Gebäudefunktionalitäten optimiert werden, beispielsweise die Beleuchtung der Haltestellen der Aufzuganlage oder der sich daran anschließenden Flure innerhalb des Gebäudes, in dem die Aufzuganlage angeordnet ist. Bei einer vorteilhaften Ausführungsform des erfindungsgemäßen Verfahrens ist vorgesehen, dass man die Aufzugsteuerung über eine Schnittstelle mit einem Gebäudemanagementsystem verbindet und dem Gebäudemanagementsystem in Abhängigkeit von den Benutzungsmustern Steuersignale bereitstellt. Wie bereits am Beispiel der Leuchtelemente der Aufzuganlage beschrieben, gibt dies auch bei der Beleuchtung der Haltestellen und der sich daran anschließenden Flure des Gebäudes die Möglichkeit, einen optimalen Kompromiss zu erzielen zwischen der Schalthäufigkeit der Leuchtelemente und der gewünschten Energieeinsparung. Es kann nämlich anhand der Benutzungsmuster vorab entschieden werden, wie lange die Beleuchtung im jeweiligen Gebäudebereich aktiviert bleiben soll. Ist damit zu rechnen, dass laufend neue Personen den Gebäudebereich betreten, so können die Leuchtelemente aktiviert bleiben, wohingegen die Leuchtelemente abgeschaltet oder reduziert werden, wenn aufgrund der Benutzungsmuster damit zu rechnen ist, dass in absehbarer Zeit keine weitere Person mehr den Gebäudebereich betritt.

Die Verbindung der Aufzugsteuerung mit dem Gebäudemanagement erfolgt bei einer vorteilhaften Ausführungsform des erfindungsgemäßen Verfahrens über das Internet oder ein Intranet, in jedem Falle über ein Computernetzwerk, das auf dem Internetprotokoll basiert. Eine Verbindung über das Internet ist von besonderem Vorteil, da dadurch der Verkabelungsaufwand stark reduziert werden kann. Es kann insbesondere eine drahtlose Verbindung über das Internet von der Aufzugsteuervorrichtung zum Gebäudemanagementsystem zum Einsatz kommen.

Von besonderem Vorteil ist die vorausschauende Steuerung der Aufzuganlage in Abhängigkeit von den Benutzungsmustern in Fällen, in denen die Aufzuganlage mehrere Fahrkörbe aufweist, denn dann kann die Zuteilung von Zielrufen zu den einzelnen Fahrkörben in Abhängigkeit von den Benutzungsmustern erfolgen. Dies ermöglicht eine energieoptimierte oder im Hinblick auf die Förderleistung optimierte Rufzuteilung. Beispielsweise kann man die Fahrkörbe den Zielrufen derart zuordnen, dass sie möglichst eine 50%ige Beladung aufweisen und dass Leerfahrten und Fahrten mit 100%iger Beladung der Fahrkörbe möglichst vermieden werden, denn derartige Fahrten sind mit einem besonders hohen Energieverbrauch verbunden. Die Beladung der Fahrkörbe kann somit vorausschauend anhand der Benutzungsmuster dem Verkehrsaufkommen angepasst werden zur Erhöhung der Förderleistung oder auch zur möglichst großen Energieeinsparung.

Es kann auch vorgesehen sein, dass man bei zu erwartendem geringen Verkehrsaufkommen mindestens einen Fahrkorb deaktiviert.

Wie eingangs erwähnt, betrifft die Erfindung auch eine Aufzuganlage zur Durchführung des Verfahrens. Die Aufzuganlage umfasst mindestens einen Schacht, in dem zumindest ein Fahrkorb zum Transport von Personen und/oder Lasten mittels einer Antriebseinrichtung verfahrbar ist, sowie eine Aufzugsteuervorrichtung, die den Betrieb der Aufzuganlage steuert. Um den Energieverbrauch und den Verschleiß der Aufzuganlage möglichst gering zu halten und die Förderleistung zu steigern, ist erfindungsgemäß vorgesehen, dass die Aufzugsteuervorrichtung mindestens eine Signalverarbeitungseinrichtung mit einem Betriebssystem aufweist sowie mindestens eine Datenbank mit einem Speichervolumen von mindestens 1 Megabyte zum Speichern von Benutzungsdaten der Aufzuganlage, wobei die innerhalb eines vorgegebenen oder vorgebbaren Erfassungszeitraums erfassten Benutzungsdaten von der Signalverarbeitungseinrichtung auf das Vorliegen von Benutzungsmustern auswertbar sind und der Betrieb der Aufzuganlage in Abhängigkeit von den Benutzungsmustern vorausschauend energie- und/oder förderleistungsoptimiert steuerbar ist.

Bei der erfindungsgemäßen Aufzuganlage kommt eine Aufzugsteuervorrichtung mit mindestens einer Signalverarbeitungseinrichtung zum Einsatz, die ein Betriebssystem aufweist. Der Einsatz eines Betriebsystems ermöglicht die Verwendung an sich bekannter Auswerteprogramme für eine Datenbank der Aufzugsteuervorrichtung. Derartige Auswerteprogramme können beispielsweise numerisch oder auch nach der Methode der fuzzy logic arbeiten. Zur Auswertung kann die Signalverarbeitungseinrichtung beispielsweise ein neuronales Netzwerk aufweisen.

Die Aufzugsteuerung der erfindungsgemäßen Aufzuganlage ist somit selbstlernend ausgestaltet, indem sie die Aufzuganlage vorausschauend anhand der Benutzungsmuster steuert, die sie aus den erfassten Benutzungsdaten extrahiert hat. Während des laufenden Betriebes der Aufzuganlage kann somit die Aufzugsteuerung das Verhalten der Benutzer erkennen und die Aufzuganlage vorausschauend zur Erzielung eines möglichst geringen Energieverbrauches und/oder zur Erzielung einer möglichst hohen Förderkapazität steuern. Das Verhalten der Aufzugsteuerung muss somit vom Hersteller oder von sonstigem Servicepersonal nicht im Detail vorgegeben werden, vielmehr analysiert die Aufzugsteuerung anhand der erfassten Benutzerdaten das Verhalten der Benutzer und richtet sich auf dieses Verhalten ein, um die Aufzuganlage mit möglichst geringem Energieverbrauch und/oder mit möglichst großer Förderkapazität zu steuern.

Die Aufzugsteuervorrichtung weist hierzu eine Datenbank auf mit einem Speichervolumen von mindestens 1 Megabyte. Die Zugriffszeit kann beispielsweise maximal 1 ms betragen. Die Datenbank ermöglicht eine fortlaufende Erfassung von Benutzerdaten, insbesondere kann über einen vorgegebenen oder auch über einen vom Betreiber der Aufzuganlage vorgebbaren Erfassungszeitraum beispielsweise der Zustand, Fahrprofile und/oder Benutzungshäufigkeiten der Aufzuganlage erfasst und gespeichert werden.

Eine Zugriffszeit von zum Beispiel 1 ms ermöglicht es, die Benutzerdaten innerhalb sehr kurzer Zeit auszuwerten. Insbesondere bei einer Speicherkapazität von mehr als 1 Megabyte, beispielsweise einer Speicherkapazität von 100 Megabyte, ist eine Zugriffszeit von günstigerweise 1 ms oder weniger im Hinblick auf eine schnelle Auswertung von Vorteil.

Der Erfassungszeitraum beträgt vorzugsweise mindestens einen Monat, darauf wurde bereits hingewiesen.

Günstigerweise beträgt der Erfassungszeitraum mindestens ein Jahr.

Die Datenbank der erfindungsgemäßen Aufzuganlage kann bevorzugt mindestens fünf Parameter verwalten. So kann beispielsweise vorgesehen sein, dass bei einer Fahrt des mindestens einen Fahrkorbs der Startzeitpunkt der Fahrt, die Start- und die Zielhaltestelle, die Beladung des Fahrkorbes und die Fahrzeit in der Datenbank speicherbar sind.

Zur Bereitstellung des entsprechenden Speicherplatzes für die Datenbank, in der die Benutzerdaten, insbesondere die Zustände, Fahrprofile und/oder Benutzungshäufigkeiten der Aufzuganlage gespeichert werden, ist es von Vorteil, wenn die Aufzugsteuervorrichtung eine Schnittstelle für ein auswechselbares digitales Speichermedium aufweist, beispielsweise für eine SD Memory Card.

Es kann auch vorgesehen sein, dass die Aufzugsteuervorrichtung der Aufzuganlage einen USB-Speicher umfasst.

Bei einer vorteilhaften Ausgestaltung der erfindungsgemäßen Aufzuganlage ist die Beschleunigung und/oder die Geschwindigkeit des mindestens einen Fahrkorbs in Abhängigkeit von den Benutzungsmustern steuerbar. Wie bereits erläutert, kann dadurch der Energieverbrauch der Aufzuganlage reduziert und dessen Förderleistung in Zeiten eines hohen Verkehrsaufkommens erhöht werden.

Günstigerweise sind Leuchtelemente von mindestens einem Fahrkorb der Aufzuganlage in Abhängigkeit von den Benutzungsmustern steuerbar.

Der mindestens eine Fahrkorb weist zumindest eine Fahrkorbtür auf. Von Vorteil ist es, wenn Öffnungs- und Schließbewegung mindestens einer Fahrkorbtür in Abhängigkeit von den Benutzungsmustern steuerbar ist.

Günstigerweise umfasst die Aufzugsteuervorrichtung der Aufzuganlage eine Schnittstelle zur Kommunikation mit dem Internet oder einem Intranet. Dies gibt die Möglichkeit, die Aufzugsteuervorrichtung über das Internet oder ein Intranet mit einem Gebäudemanagementsystem zu verbinden, so dass diesem von der Aufzugsteuervorrichtung Steuersignale in Abhängigkeit von den Benutzungsmustern bereitgestellt werden können.

Die nachfolgende Beschreibung einer bevorzugten Ausführungsform der Erfindung dient im Zusammenhang mit der Zeichnung der näheren Erläuterung.

Die einzige Figur der Zeichnung zeigt schematisch eine Teilschnittansicht einer erfindungsgemäßen Aufzuganlage.

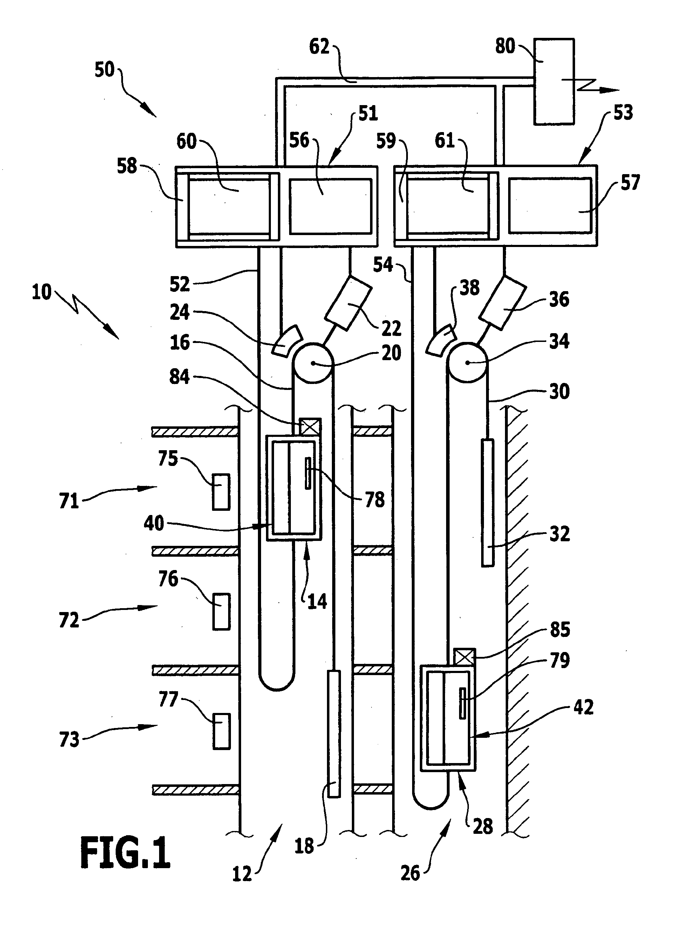

In Figur 1 ist schematisch eine Aufzuganlage 10 dargestellt mit einem ersten Schacht 12, in dem ein erster Fahrkorb 14 in vertikaler Richtung nach oben und nach unten verfahrbar ist. Der erste Fahrkorb 14 ist über ein erstes Tragseil 16 mit einem ersten Gegengewicht 18 gekoppelt. Das erste Tragseil 16 ist über eine erste Tragscheibe 20 geführt, die von einem ersten Motor 22 in Drehung versetzt und von einer ersten Bremse 24 abgebremst werden kann. Der erste Motor 22 und die erste Tragscheibe 20 bilden eine erste Antriebseinrichtung der Aufzuganlage 10.

Die Aufzuganlage 10 weist darüber hinaus einen zweiten Schacht 26 auf, in dem ein zweiter Fahrkorb 28 in vertikaler Richtung nach oben und nach unten verfahrbar ist. Der zweite Fahrkorb 28 ist über ein zweites Tragseil 30 mit einem zweiten Gegengewicht 32 gekoppelt. Das zweite Tragseil 30 ist über eine zweite Tragscheibe 34 geführt, die von einem zweiten Motor 36 in Drehung versetzt wird und die von einer zweiten Bremse 38 abgebremst werden kann. Der zweite Motor 36 und die zweite Tragscheibe 34 bilden eine zweite Antriebseinrichtung der Aufzuganlage 10.

Die beiden Fahrkörbe 14 und 28 weisen jeweils eine Fahrkorbtür 40 bzw. 42 auf mit zwei Türblättern, die in üblicher Weise zum Öffnen und Schließen der Fahrkorbtüren 40 und 42 verschoben werden können.

Die Steuerung der Aufzuganlage 10 erfolgt mittels einer Aufzugsteuervorrichtung 50, die eine erste Steuereinrichtung 51 und eine zweite Steuereinrichtung 53 aufweist. Die erste Steuereinrichtung 51 ist über ein erstes Hängekabel 52 mit dem ersten Fahrkorb 14 und über Steuerleitungen mit dem ersten Motor 22 und der ersten Bremse 24 verbunden. Die zweite Steuereinrichtung 53 ist über ein zweites Hängekabel 54 mit dem zweiten Fahrkorb 28 und über Steuerleitungen mit dem zweiten Motor 36 und der zweiten Bremse 38 verbunden.

Die erste Steuereinrichtung 51 umfasst eine erste Signalverarbeitungseinrichtung 56 in Form einer Mikroprozessorbaugruppe, die bevorzugt modular oder aber monolitisch aufgebaut ist. Die erste Signalverarbeitungseinrichtung 56 kann aber auch als programmierbarer integrierter Schaltkreis in Form eines FPGAs ausgebildet sein (Field Programmable Gate Array).

In entsprechender Weise umfasst die zweite Steuereinrichtung 53 eine zweite Signalverarbeitungseinrichtung 57 in Form einer modularen oder monolitischen Mikroprozessorbaugruppe oder in Form eines programmierbaren integrierten Schaltkreises (FPGA).

Die beiden Steuereinrichtungen 51 und 53 weisen jeweils eine Schnittstelle 58 bzw. 59 für ein auswechselbares Speichermedium auf. In der dargestellten Ausführungsform sind die auswechselbaren Speichermedien in Form von SD Memory Cards ausgestaltet. Über einen Kommunikationsbus 62 stehen die Steuereinrichtungen 51 und 53 miteinander in Verbindung. Die beiden Speichermedien bilden jeweils eine Datenbank 60, 61, in der die Benutzungsdaten der Aufzuganlage 10, insbesondere die Beladungszustände der Fahrkörbe 14 und 28, sowie die Fahrprofile der Fahrkörbe 14 und 28 und auch die Benutzungshäufigkeiten der Fahrkörbe 14 und 28 gespeichert werden. Die Fahrprofile beinhalten den Geschwindigkeitsverlauf der Fahrkörbe 14 und 28 in Abhängigkeit von deren zurückgelegtem Weg ausgehend von einem Startpunkt zu einem Zielpunkt.

Zur Eingabe eines Zielrufes ist auf den von der Aufzuganlage 10 zu bedienenden Stockwerken, von denen in der Zeichnung nur drei Stockwerke 71, 72 und 73 dargestellt sind, jeweils eine Ein- und Ausgabeeinrichtung 75, 76 bzw. 77 angeordnet. Diese können beispielsweise als berührungsempfindlicher Bildschirm (Touchscreen) ausgestaltet sein. Die Ein- und Ausgabeeinrichtungen 75, 76 und 77 stehen über einen an sich bekannten und deshalb in der Zeichnung zur Erzielung einer besseren Übersicht nicht dargestellten Feldbus mit der Aufzugsteuervorrichtung 50 in elektrischer Verbindung.

Wie bereits erläutert, werden die Zustände, Fahrprofile und Benutzungshäufigkeiten der Aufzuganlage 10 in den Datenbanken 60, 61 gespeichert. Die Signalverarbeitungseinrichtungen 56 und 57 weisen jeweils ein Betriebssystem auf sowie eine Software zur Auswertung der Datenbank 60 bzw. 61, wobei Benutzungsmuster numerisch oder mittels der fuzzy-logic-Methode erkannt werden. Insbesondere wird anhand der in den Datenbanken hinterlegten Daten erkannt, zu welchen Zeiten wie viele Benutzer welchen Fahrkorb 14 oder 28 benutzen, in dem sie von einem bestimmten Startstockwerk zu einem bestimmten Zielstockwerk fahren. Die Steuerung der Aufzuganlage 10 erfolgt vorausschauend in Abhängigkeit von den erkannten Benutzungsmustern, wobei der Energieverbrauch möglichst gering gehalten werden soll und die Förderkapazität in Zeiten eines großen Verkehrsaufkommens möglichst groß sein soll. Zu diesem Zweck passt die Aufzugsteuervorrichtung 50 die Beschleunigung und die Geschwindigkeit der Fahrkörbe 14 und 28 an das anhand der Benutzungsmuster zu erwartende Verkehrsaufkommen an. Bei großem Verkehrsaufkommen werden eine größere Beschleunigung und eine größere Geschwindigkeit gewählt als bei einem geringeren Verkehrsaufkommen, so dass bei hohem Verkehrsaufkommen die Förderkapazität möglichst groß ist und bei geringerem Verkehrsaufkommen der Energieverbrauch der Aufzuganlage 10 möglichst gering gehalten werden kann.

In entsprechender Weise steuert die Aufzugsteuervorrichtung 50 auch die Leuchtelemente 78, 79 der Fahrkörbe 14 und 28. Hierbei schließt sie einen möglichst optimalen Kompromiss zwischen der Schalthäufigkeit der Leuchtelemente und der gewünschten Energieeinsparung. Sie ermittelt hierzu anhand der aus den Datenbanken 60 und 61 gewonnenen Benutzungsmuster den Zeitpunkt, nach dem bei einer Nichtbenutzung des jeweiligen Fahrkorbs dessen Beleuchtung abgeschaltet wird. Wird aufgrund der Benutzungsmuster erwartet, dass in Kürze ein weiterer Zielruf eingeht, so wird die Fahrkorbbeleuchtung noch nicht abgeschaltet, so dass unnötige Ein- und Ausschaltvorgänge vermieden werden. Lassen jedoch die erfassten Benutzungsmuster erwarten, dass in absehbarer Zeit kein weiterer Zielruf eingeht, so wird die Fahrkorbbeleuchtung möglichst bald abgeschaltet, um den Energieverbrauch zu reduzieren.

Auch die Bewegung der Fahrkorbtüren 40 und 42 wird von der Aufzugsteuervorrichtung 50 in Abhängigkeit von den aus den Datenbanken 60 und 61 gewonnenen Benutzungsmustern gesteuert. In Zeiten eines zu erwartenden hohen Verkehrsaufkommens werden die Beschleunigung und die Geschwindigkeit der Fahrkorbtüren 40, 42 erhöht, wohingegen sie in Zeiten, in denen ein geringeres Verkehrsaufkommen zu erwarten ist, vermindert werden, so dass der Energieverbrauch und der Verschleiß der Fahrkorbtüren 40, 42 gering gehalten werden kann.

Auch die Zuteilung der Fahrkörbe 14, 28 zu einem eingegebenen Zielruf sowie die jeweilige Anfahrbewegung der Fahrkörbe erfolgt von der Aufzugsteuervorrichtung 50 in Abhängigkeit von den erfassten Benutzungsmustern. Ist anhand der Benutzungsmuster zu erwarten, dass an einem bestimmten Stockwerk 71, 72 oder 73 in Kürze ein weiterer Fahrgast hinzukommt, so kann der Start eines Fahrkorbes 14 oder 28 etwas verzögert werden, um dem in Kürze zu erwartenden weiteren Fahrgast noch den Zutritt zum Fahrkorb 14 bzw. 28 zu ermöglichen.

Die Aufzugsteuervorrichtung 50 weist eine Schnittstelle 80 für eine drahtlose Kommunikation über das Internet oder ein Intranet auf. Die Schnittstelle 80 ist an den Kommunikationsbus 62 angeschlossen. Über die Schnittstelle 80 kann die Aufzugsteuervorrichtung 50 beispielsweise mit einem Gebäudemanagementsystem verbunden werden, das die Beleuchtung der Haltestellen der Aufzuganlage 10 und der sich daran anschließenden Flure in Abhängigkeit von den Benutzungsmustern steuert, die von der Aufzugsteuervorrichtung 50 erkannt wurden.

Die Fahrkörbe 14 und 28 weisen zur Belüftung jeweils ein Lüftungsaggregat 84, 85 auf. Die Steuerung der Lüftungsaggregate 84, 85 erfolgt über die Hängekabel 52 bzw. 54 ebenfalls von der Aufzugsteuervorrichtung 50 in Abhängigkeit von den Benutzungsmustern. In Zeiten, in denen damit zu rechnen ist, dass mehrere Personen gemeinsam einen bestimmten Fahrkorb 14 oder 28 benutzen, wird die Leistung der Lüftungsaggregate 84 und 85 erhöht, wohingegen in Zeiten, in denen anhand der Benutzungsmuster zu erwarten ist, dass die Fahrkörbe 14, 28 eher von nur einer einzigen Person benutzt werden, die Leistung der Lüftungsaggregate 84, 85 reduziert oder die Lüftungsaggregate 84 und 85 ausgeschaltet werden.

Die Auswertung der in den Datenbanken 60 und 61 hinterlegten Daten ermöglicht somit der Aufzugsteuervorrichtung 50 ein Energiemanagement als Funktion des Verkehrsaufkommens, so dass der Energieverbrauch möglichst gering gehalten und dennoch die Förderleistung an das jeweils zu erwartende Verkehrsaufkommen angepasst werden kann.

## Patentansprüche

1. Verfahren zur Steuerung einer Aufzugsanlage (10) mit mindestens einem Schacht (12, 26), in dem zumindest ein Fahrkorb (14, 28) zum Transport von Personen und/oder Lasten mittels einer Antriebseinrichtung (20, 22, 34, 36) verfahrbar ist, und mit einer Aufzugsteuervorrichtung (50), die den Betrieb der Aufzugsanlage steuert, **dadurch gekennzeichnet, dass** man Benutzungsdaten der Aufzugsanlage (10) erfasst und in einer Datenbank (60, 61) der Aufzugsteuervorrichtung (50) speichert, innerhalb eines vorgegebenen oder vorgebbaren Erfassungszeitraums erfasste Benutzungsdaten mittels mindestens einer ein Betriebssystem aufweisenden Signalverarbeitungseinrichtung (56, 57) der Aufzugsteuervorrichtung (50) auf das Vorliegen von Benutzungsmustern auswertet und den Betrieb der Aufzugsanlage (10) in Abhängigkeit von den Benutzungsmustern vorausschauend energie- und/oder förderleistungsoptimiert steuert.

2. Verfahren nach Anspruch 1, **dadurch gekennzeichnet, dass** der Erfassungszeitraum mindestens einen Monat beträgt.

3. Verfahren nach Anspruch 1, **dadurch gekennzeichnet, dass** der Erfassungszeitraum mindestens ein Jahr beträgt.

4. Verfahren nach einem der voranstehenden Ansprüche, **dadurch gekennzeichnet, dass** man die Benutzungsdaten fortlaufend erfasst.

5. Verfahren nach einem der voranstehenden Ansprüche, **dadurch gekennzeichnet, dass** man bei einer Fahrt des mindestens einen Fahrkorbs (14, 28) als Benutzungsdaten zumindest den Startzeitpunkt der Fahrt, die Start- und die Zielhaltestelle und die Beladung des Fahrkorbes (14, 28) erfasst.

6. Verfahren nach einem der voranstehenden Ansprüche, **dadurch gekennzeichnet, dass** man die Beschleunigung und/oder die Geschwindigkeit des mindestens einen Fahrkorbs (14, 28) in Abhängigkeit von den Benutzungsmustern steuert.

7. Verfahren nach einem der voranstehenden Ansprüche, **dadurch gekennzeichnet, dass** man die Leuchtelemente (78, 79) des mindestens einen Fahrkorbs (14, 28) in Abhängigkeit von den Benutzungsmustern steuert.

8. Verfahren nach einem der voranstehenden Ansprüche, **dadurch gekennzeichnet, dass** man die Öffnungs- und Schließbewegung von mindestens einer Fahrkorbtür (40, 42) in Abhängigkeit von den Benutzungsmustern steuert.

9. Verfahren nach einem der voranstehenden Ansprüche, **dadurch gekennzeichnet, dass** man Lüftungsaggregate (84, 85) des mindestens einen Fahrkorbs (14, 28) in Abhängigkeit von den Benutzungsmustern steuert.

10. Verfahren nach einem der voranstehenden Ansprüche, **dadurch gekennzeichnet, dass** man die Aufzugsteuervorrichtung (50) über eine Schnittstelle (80) mit einem Gebäudemanagementsystem verbindet und dem Gebäudemanagementsystem in Abhängigkeit von den Benutzungsmustern Steuersignale bereitstellt.

11. Verfahren nach Anspruch 10, **dadurch gekennzeichnet, dass** man die Aufzugsteuervorrichtung (50) über das Internet oder über ein Intranet mit dem Gebäudemanagementsystem verbindet.

12. Verfahren nach einem der voranstehenden Ansprüche, **dadurch gekennzeichnet, dass** man mehrere Fahrkörbe (14, 28) bereitstellt und die Zuteilung von Zielrufen zu den einzelnen Fahrkörben (14, 28) in Abhängigkeit von den Benutzungsmustern durchführt.

13. Aufzugsanlage zur Durchführung des Verfahrens nach einem der voranstehenden Ansprüche mit mindestens einem Schacht (12, 26), in dem zumindest ein Fahrkorb (14, 28) zum Transport von Personen und/oder Lasten mittels einer Antriebseinrichtung (20, 22, 34, 36) verfahrbar ist und mit einer Aufzugssteuervorrichtung (50), die den Betrieb der Aufzugsanlage (10) steuert, **dadurch gekennzeichnet, dass** die Aufzugsteuervorrichtung (50) mindestens eine Signalverarbeitungseinrichtung (56, 57) mit einem Betriebssystem aufweist sowie mindestens eine Datenbank (60, 61) mit einem Speichervolumen von mindestens 1 Megabyte zum Speichern von Benutzungsdaten der Aufzugsanlage (10), wobei innerhalb eines vorgegebenen oder vorgebbaren Erfassungszeitraums erfasste Benutzungsdaten von der Signalverarbeitungseinrichtung (56, 57) auf das Vorliegen von Benutzungsmustern auswertbar sind und der Betrieb der Aufzugsanlage (10) in Abhängigkeit von den Benutzungsmustern vorausschauend energie- und/oder förderleistungsoptimiert steuerbar ist.

14. Aufzugsanlage nach Anspruch 13, **dadurch gekennzeichnet, dass** die Aufzugssteuervorrichtung (50) mindestens eine Schnittstelle (58, 59) für ein auswechselbares Speichermedium aufweist.

15. Aufzugsanlage nach Anspruch 13 oder 14, **dadurch gekennzeichnet, dass** die Beschleunigung und/oder die Geschwindigkeit des mindestens einen Fahrkorbs (14, 28) in Abhängigkeit von den Benutzungsmustern steuerbar ist.

16. Aufzugsanlage nach einem der Ansprüche 13 bis 15, **dadurch gekennzeichnet, dass** Leuchtelemente (78, 79) des mindestens einen Fahrkorbs (14, 28) in Abhängigkeit von den Benutzungsmustern steuerbar sind.

17. Aufzugsanlage nach einem der Ansprüche 13 bis 16, **dadurch gekennzeichnet, dass** die Öffnungs- und Schließbewegung von mindestens einer Fahrkorbtür (40, 42) in Abhängigkeit von den Benutzungsmustern steuerbar ist.

18. Aufzugsanlage nach einem der Ansprüche 13 bis 17, **dadurch gekennzeichnet, dass** Lüftungsaggregate (84, 85) des mindestens einen Fahrkorbs (14, 28) in Abhängigkeit von den Benutzungsmustern steuerbar sind.

19. Aufzugsanlage nach einem der Ansprüche 13 bis 18, **dadurch gekennzeichnet, dass** die Aufzugssteuervorrichtung (50) eine Schnittstelle (80) zur Kommunikation mit dem Internet oder einem Intranet aufweist.

## Claims

1. Method for controlling an elevator system (10) having at least one shaft (12, 26) in which at least one elevator car (14, 28) for transporting people and/or loads is movable by means of a drive apparatus (20, 22, 34, 36), and having an elevator control device (50) which controls the operation of the elevator system, **characterized in that** use data of the elevator system (10) are recorded and stored in a database (60, 61) of the elevator control device (50), use data recorded within a predefined or predefinable recording period are evaluated for the presence of use patterns by means of at least one signal processing device (56, 57) of the elevator control device (50), the signal processing device having an operating system, and the operation of the elevator system (10) is controlled in dependence on the use patterns in a manner which is anticipatory and is optimized with regard to energy and/or transport capacity.

2. Method according to Claim 1, **characterized in that** the recording period is at least one month.

3. Method according to Claim 1, **characterized in that** the recording period is at least one year.

4. Method according to one of the preceding claims, **characterized in that** the use data are continuously recorded.

5. Method according to one of the preceding claims, **characterized in that** during a trip of the at least one elevator car (14, 28), at least the start time of the trip, the origin and destination stops, and the loading of the elevator car (14, 28) are recorded as use data.

6. Method according to one of the preceding claims, **characterized in that** the acceleration and/or the speed of the at least one elevator car (14, 28) is/are controlled in dependence on the use patterns.

7. Method according to one of the preceding claims, **characterized in that** the lighting elements (78, 79) of the at least one elevator car (14, 28) are controlled in dependence on the use patterns.

8. Method according to one of the preceding claims, **characterized in that** the opening and closing motion of at least one elevator car door (40, 42) is controlled in dependence on the use patterns.

9. Method according to one of the preceding claims, **characterized in that** ventilation units (84, 85) of the at least one elevator car (14, 28) are controlled in dependence on the use patterns.

10. Method according to one of the preceding claims, **characterized in that** the elevator control device (50) is connected to a building management system via an interface (80), and control signals are provided to the building management system in dependence on the use patterns.

11. Method according to Claim 10, **characterized in that** the elevator control device (50) is connected to the building management system via the Internet or via an intranet.

12. Method according to one of the preceding claims, **characterized in that** a plurality of elevator cars (14, 28) is provided, and the assignment of destination calls to the individual elevator cars (14, 28) is carried out in dependence on the use patterns.

13. Elevator system for carrying out the method according to one of the preceding claims, having at least one shaft (12, 26) in which at least one elevator car (14, 28) for transporting people and/or loads is movable by means of a drive apparatus (20, 22, 34, 36), and having an elevator control device (50) which controls the operation of the elevator system (10), **characterized in that** the elevator control device (50) has at least one signal processing device (56, 57) that has an operating system, and at least one database (60, 61) having a storage volume of at least 1 megabyte for storing use data of the elevator system (10), use data recorded within a predefined or predefinable recording period being evaluatable by the signal processing device (56, 57) for the presence of use patterns, and the operation of the elevator system (10) being controllable in dependence on the use patterns in a manner which is anticipatory and is optimized with regard to energy and/or transport capacity.

14. Elevator system according to Claim 13, **characterized in that** the elevator control device (50) has at least one interface (58, 59) for an exchangeable storage medium.

15. Elevator system according to Claim 13 or 14, **characterized in that** the acceleration and/or the speed of the at least one elevator car (14, 28) is/are controllable in dependence on the use patterns.

16. Elevator system according to one of Claims 13 to 15, **characterized in that** lighting elements (78, 79) of the at least one elevator car (14, 28) are controllable in dependence on the use patterns.

17. Elevator system according to one of Claims 13 to 16, **characterized in that** the opening and closing motion of at least one elevator car door (40, 42) is controllable in dependence on the use patterns.

18. Elevator system according to one of Claims 13 to 17, **characterized in that** ventilation units (84, 85) of the at least one elevator car (14, 28) are controllable in dependence on the use patterns.

19. Elevator system according to one of Claims 13 to 18, **characterized in that** the elevator control device (50) has an interface (80) for communicating with the Internet or an intranet.

## Revendications

1. Procédé de commande d'une installation d'ascenseur ou de monte-charge (10) comprenant au moins une gaine ou cage d'ascenseur (12, 26) dans laquelle peut être déplacée, au moyen d'un système d'entraînement (20, 22, 34, 36), au moins une cabine d'ascenseur ou cabine mobile (14, 28) pour le transport de personnes et/ou de charges, et comprenant un dispositif de commande d'ascenseur (50), qui commande le fonctionnement de l'installation d'ascenseur, **caractérisé en ce que** l'on relève des données d'utilisation de l'installation d'ascenseur (10) et on les mémorise dans une banque de données (60, 61) du dispositif de commande d'ascenseur (50), **en ce que** l'on traite les données d'utilisation relevées pendant un intervalle de temps prédéfini ou pouvant être prédéfini, quant à la présence de modèles d'utilisation, au moyen d'un ensemble de traitement de signal (56, 57) du dispositif de commande d'ascenseur (50), qui comprend un système d'exploitation, et **en ce que** l'on commande le fonctionnement de l'installation d'ascenseur (10) de manière prévisionnelle, en fonction des modèles d'utilisation, de façon optimisée sur le plan de la consommation d'énergie et/ou de la capacité de transport.

2. Procédé selon la revendication 1, **caractérisé en ce que** l'intervalle de temps de relevé vaut au moins un mois.

3. Procédé selon la revendication 1, **caractérisé en ce que** l'intervalle de temps de relevé vaut au moins un an.

4. Procédé selon l'une des revendications précédentes, **caractérisé en ce que** l'on relève les données d'utilisation de manière continuelle.

5. Procédé selon l'une des revendications précédentes, **caractérisé en ce que** l'on relève, pendant un trajet de déplacement de ladite au moins une cabine d'ascenseur ou cabine mobile (14, 28), en tant que données d'utilisation, au moins l'instant de départ du trajet de déplacement, le lieu d'arrêt de départ et le lieu d'arrêt de destination, et la charge de la cabine d'ascenseur ou cabine mobile (14, 28).

6. Procédé selon l'une des revendications précédentes, **caractérisé en ce que** l'on commande l'accélération et/ou la vitesse de ladite au moins une cabine d'ascenseur ou cabine mobile (14, 28), en fonction des modèles d'utilisation.

7. Procédé selon l'une des revendications précédentes, **caractérisé en ce que** l'on commande les éléments d'éclairage (78, 79) de ladite au moins une cabine d'ascenseur ou cabine mobile (14, 28), en fonction des modèles d'utilisation.

8. Procédé selon l'une des revendications précédentes, **caractérisé en ce que** l'on commande le mouvement d'ouverture et de fermeture d'au moins une porte (40, 42) de cabine d'ascenseur ou cabine mobile, en fonction des modèles d'utilisation.

9. Procédé selon l'une des revendications précédentes, **caractérisé en ce que** l'on commande des appareillages de ventilation (84, 85) de ladite au moins une cabine d'ascenseur ou cabine mobile (14, 28), en fonction des modèles d'utilisation.

10. Procédé selon l'une des revendications précédentes, **caractérisé en ce que** l'on relie le dispositif de commande d'ascenseur (50) à un système de gestion de bâtiment par l'intermédiaire d'une interface (80), et **en ce que** l'on fournit au système de gestion de bâtiment, des signaux commande, en fonction des modèles d'utilisation.

11. Procédé selon la revendication 10, **caractérisé en ce que** l'on relie le dispositif de commande d'ascenseur (50) au système de gestion de bâtiment, par l'intermédiaire d'internet ou d'un réseau intranet.

12. Procédé selon l'une des revendications précédentes, **caractérisé en ce que** l'on met à disposition plusieurs cabines d'ascenseur ou cabines mobiles (14, 28), et l'on effectue l'affectation d'appels de destination aux cabines d'ascenseur ou cabines mobiles (14, 28) individuelles, en fonction des modèles d'utilisation.

13. Installation d'ascenseur ou de monte-charge pour la mise en oeuvre du procédé selon l'une des revendications précédentes, comprenant au moins une gaine ou cage d'ascenseur (12, 26) dans laquelle peut être déplacée, au moyen d'un système d'entraînement (20, 22, 34, 36), au moins une cabine d'ascenseur ou cabine mobile (14, 28) pour le transport de personnes et/ou de charges, et comprenant un dispositif de commande d'ascenseur (50), qui commande le fonctionnement de l'installation d'ascenseur (10), **caractérisée en ce que** le dispositif de commande d'ascenseur (50) présente au moins un ensemble de traitement de signal (56, 57), qui comprend un système d'exploitation, ainsi qu'au moins une banque de données (60, 61) d'une capacité de mémoire d'au moins 1 mégabyte pour la mémorisation de données d'utilisation de l'installation d'ascenseur (10), les données d'utilisation relevées pendant un intervalle de temps prédéfini ou pouvant être prédéfini, étant susceptibles d'être traitées par l'ensemble de traitement de signal (56, 57), quant à la présence de modèles d'utilisation, et le fonctionnement de l'installation d'ascenseur (10) pouvant être commandé de manière prévisionnelle, en fonction des modèles d'utilisation, de façon optimisée sur le plan de la consommation d'énergie et/ou de la capacité de transport.

14. Installation d'ascenseur selon la revendication 13, **caractérisée en ce que** le dispositif de commande d'ascenseur (50) comprend au moins une interface (58, 59) pour un support de mémoire interchangeable.

15. Installation d'ascenseur selon la revendication 13 ou la revendication 14, **caractérisée en ce qu'**il est possible de commander l'accélération et/ou la vitesse de ladite au moins une cabine d'ascenseur ou cabine mobile (14, 28), en fonction des modèles d'utilisation.

16. Installation d'ascenseur selon l'une des revendications 13 à 15, **caractérisée en ce qu'**il est possible de commander des éléments d'éclairage (78, 79) de ladite au moins une cabine d'ascenseur ou cabine mobile (14, 28), en fonction des modèles d'utilisation.

17. Installation d'ascenseur selon l'une des revendications 13 à 16, **caractérisée en ce qu'**il est possible de commander le mouvement d'ouverture et de fermeture d'au moins une porte (40, 42) de cabine d'ascenseur ou cabine mobile, en fonction des modèles d'utilisation.

18. Installation d'ascenseur selon l'une des revendications 13 à 17, **caractérisée en ce qu'**il est possible de commander des appareillages de ventilation (84, 85) de ladite au moins une cabine d'ascenseur ou cabine mobile (14, 28), en fonction des modèles d'utilisation.

19. Installation d'ascenseur selon l'une des revendications 13 à 18, **caractérisée en ce que** le dispositif de commande d'ascenseur (50) comporte une interface (80) pour la communication avec internet ou un réseau intranet.
